# FASCICULE DE BREVET EUROPEEN

(11) **EP 1 225 549 B1**
(45) Date de publication et mention de la délivrance du brevet: **19.10.2005**
(21) Numéro de dépôt: 02000026.1
(22) Date de dépôt: 04.01.2002
(51) Int. Cl.: G07F 7/08, G07F 19/00

(54) **Terminal et procédé de paiement électronique.**
Endgerät und Verfahren zum elektronischen Bezahlen
Terminal and method for electronic payment

(30) Priorité: 04.01.2001 FR 0100098
(43) Date de publication de la demande: 24.07.2002
(73) Titulaire: SAGEM S.A., 75015 Paris (FR)
(72) Inventeur: SARRADIN, Jean-Louis, 95190, FONTENAY EN PARISIS (FR)
(74) Mandataire: Schmit, Christian Norbert Marie

(56) Documents cités:
- EP-A- 1 014 317
- WO-A-00/68866
- WO-A-94/11849
- WO-A-98/49658
- FR-A- 2 749 424
- FR-A- 2 780 800
- US-A- 5 754 655

## Description

La présente invention a pour objet d'une part un terminal de paiement électronique particulier et d'autre part un procédé de paiement électronique faisant intervenir ce terminal de paiement particulier. Plus particulièrement, le terminal de paiement électronique selon l'invention offre la possibilité de mener à bien des transactions commerciales dans lesquelles un client effectue une opération de paiement depuis un appareil de type téléphone mobile. Le procédé selon l'invention concerne un procédé de paiement électronique dans lequel un client effectue une opération de paiement par l'intermédiaire d'un appareil de type téléphone mobile, et dans lequel un vendeur accepte, au moyen du terminal du paiement électronique selon l'invention, l'opération de paiement effectuée par le client. L'invention a pour but essentiel d'adapter et d'utiliser des terminaux de paiement électronique, fréquemment utilisés par des commerçants, pour assurer des transactions commerciales faisant intervenir une opération de paiement, à distance et sécurisée, au moyen d'un téléphone mobile.

D'une façon générale le domaine de l'invention est à la fois celui des transactions commerciales faisant intervenir des terminaux de paiement électronique, et celui des procédés de paiement à distance faisant intervenir des téléphones mobiles.

Dans le domaine de l'exécution de transactions commerciales, des terminaux de paiement électronique sont fréquemment utilisés notamment pour accepter des paiements par cartes à puce. Un tel paiement comporte au préalable une transaction commerciale. Ce type de transaction comprend essentiellement la définition des références d'un bien à acquérir, ou d'une prestation à se faire servir, et la communication du prix correspondant. Le client en payant le prix bénéficie en contrepartie du bien ou de la prestation.

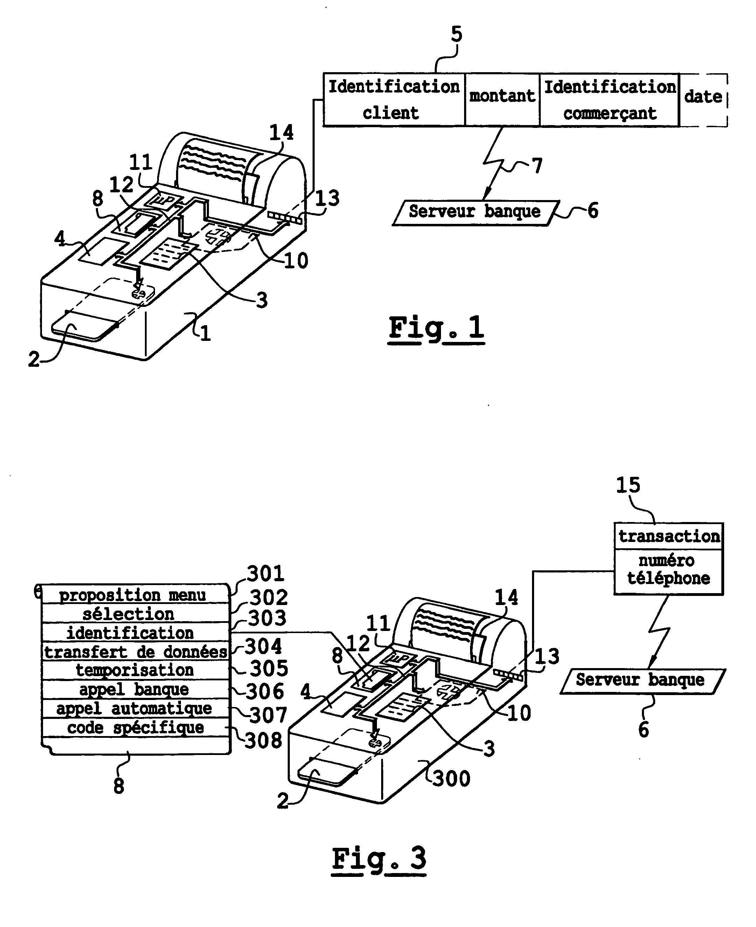

Le déroulement schématique d'un paiement par carte à puce, au moyen d'un terminal de paiement classique, est illustré à la figure 1. Dans un tel mode paiement, les références de la transaction sont communiquées à un terminal de paiement 1 qui élabore un message de paiement 5. Ce message de paiement comporte notamment le montant de la transaction à payer, qui a été composé par le commerçant au moyen d'un clavier 3. Il comporte par ailleurs des informations telles que la date et l'heure de la transaction. Le message de paiement comporte également la désignation des références bancaires du commerçant. Celles-ci sont contenues dans une mémoire de données 4, ou éventuellement dans un module 10 d'identification du commerçant. Ces références bancaires servent à virer sur le compte bancaire du commerçant la somme qui lui est payée.

Comme dernier argument, le message de paiement comporte la désignation d'un compte bancaire du client, et l'accord de ce client sur le paiement du prix. La désignation du compte bancaire est réalisée en introduisant dans le terminal de paiement électronique 1 du commerçant une carte 2 à puce du client. La manifestation de l'accord du client est une opération complexe. En effet autant il est facile au client de donner son accord pour le paiement du prix, autant il est nécessaire pour le commerçant de s'assurer d'une part que la carte 2 à puce introduite dans son terminal 1 est une carte à puce autorisée et que d'autre part le détenteur de cette carte à puce en est bien le détenteur légal.

La première opération est réalisée au cours d'une opération d'authentification. Dans ce cadre le terminal 1 échange avec la carte 2 à puce des informations pour s'assurer que la carte à puce n'est pas une carte à puce falsifiée. Dans un deuxième temps, la carte à puce effectue une vérification de ce que le porteur est le porteur légal. La deuxième opération, qui peut éventuellement être placée avant la première, comporte la composition par le porteur, sur un clavier du terminal, d'un code d'identification PIN (Personal Identification Number, numéro d'identification personnel) que la carte à puce utilise pour vérifier qu'elle est sollicitée normalement. Dans un troisième temps, il est également possible à la carte à puce d'authentifier le dispositif de lecture de cartes contenu dans le terminal 1: c'est-à-dire de vérifier que le lecteur est un lecteur autorisé. L'authentification du lecteur, par la carte à puce est du même type que l'authentification de la carte à puce par le lecteur.

Ce faisant, en composant son code PIN, le porteur effectue deux opérations. La première opération, comme dit ci-dessus, consiste à montrer qu'il est le bon porteur de la carte à puce. La deuxième opération est d'ordre juridique : le fait de composer le bon code PIN est considéré comme un accord de paiement. Suite à ces opérations, une étape de calcul de certificat bancaire est exécutée ; elle permet au commerçant de prouver que telle carte a été utilisée à tel moment, lui procurant ainsi une garantie de paiement.

Une fois que ces actions sont réalisées, le message de paiement 5 est entièrement constitué. Le message de paiement comporte explicitement, ou implicitement, les informations suivantes : le numéro de compte bancaire du commerçant, le montant de la transaction, le numéro du compte bancaire du client. Il peut comporter d'autres indications comme le jour de la transaction, la nature de la transaction, ainsi qu'un numéro d'opération indiquant, pour le terminal, le nombre d'opérations traitées dans la journée jusqu'à cette dernière opération. Ce message de paiement sera par la suite envoyé à un centre payeur par une communication téléphonique. Le terminal 1 est en effet relié, au niveau d'un connecteur 13, par une ligne téléphonique 7 (filaire, hertzienne ou autres) avec un serveur 6 du centre payeur du créancier. Le serveur 6 de ce centre payeur est capable de recevoir le message 5 envoyé, et de traiter la transaction financière qui lui correspond. D'une manière connue, le serveur 6 de le centre payeur du commerçant émet un ordre de prélèvement du compte du client pour le débiter et pour créditer le compte du commerçant qu'elle gère. Dans le centre payeur le paiement est ainsi effectué : le message de paiement est transformé en paiement.

Dans certains cas, compte tenu de montants élevés des transactions, le message de paiement doit être autorisé par une autorisation préalable du centre payeur. Dans ce cas, une connexion en temps réel est effectuée au centre payeur, dans la période au cours de laquelle le client a composé son code PIN. Au cours de cette connexion, le montant disponible sur le compte du client est vérifié ou peut être vérifié et peut par ailleurs être réservé en paiement de la transaction concernée. Lors de certaines communications de demandes d'autorisation, la mémoire de données 4 du terminal de paiement 1 est mise à jour pour lui communiquer des numéros de cartes à puce interdites. Celles-ci peuvent être interdites notamment parce que leur véritable titulaire y a fait opposition après la constatation d'un vol.

Toujours dans le domaine de l'exécution de transactions commerciales, les terminaux de paiement électronique précédemment décrits peuvent être utilisés pour accepter d'autres types de paiement que les paiements par carte à puce. On peut notamment effectuer des paiements au moyen de cartes de paiement qui ne comportent pas de puce électronique, mais qui comportent uniquement une piste magnétique. Les terminaux de paiement prévoient à cet effet un lecteur de carte à piste non représenté à la figure 1. Dans ce cas, des données sont lues sur la piste magnétique par le terminal de paiement électronique, le procédé de paiement étant similaire à celui qui vient d'être décrit. Un ticket, comportant les caractéristiques essentielles de la transaction, est alors édité par le terminal 1. Ce ticket doit être signé par le client pour que l'on puisse juridiquement constater qu'il y a eu accord de paiement sur la transaction considérée. Une telle preuve n'est pas nécessaire dans le cas de l'utilisation d'une carte à puce, le code tapé étant considéré comme une preuve suffisante.

On peut également effectuer des paiements en communiquant son numéro de carte au commerçant, qui saisit ce numéro sur le clavier 3 du terminal de paiement électronique. Ce procédé de paiement ne permet cependant pas les opérations d'authentification de la carte et d'authentification du porteur.

Afin de pouvoir concilier ces différents types de paiements, le terminal de paiement électronique 1 dispose d'une option qui permet aux commerçants de déterminer le mode de paiement choisi, cet à dire soit au moyen d'une puce ou d'une piste magnétique qui sera lue par le terminal de paiement électronique, soit au moyen d'un code de carte qui est tapé sur le clavier 3. Dans un mode de mise en oeuvre particulier, un système mécanique peut détecter l'introduction d'une carte dans le terminal de paiement électronique, auquel cas le paiement sera nécessairement effectué au moyen d'une puce de cette carte. Si aucune présence de carte n'est détectée, le paiement est nécessairement effectué suite à la composition d'un numéro de carte sur le clavier 3 du terminal de paiement électronique.

Sur la figure 1 sont également représentés une mémoire de programmes 8, un microprocesseur 11, un bus de communication bidirectionnel 12 et un écran 14 du terminal de paiement. Le microprocesseur 11 gère l'ensemble des échanges de données qui ont lieu sur le bus 12, ce bus étant connecté à l'ensemble des éléments précédemment mentionnés dans le terminal 1.

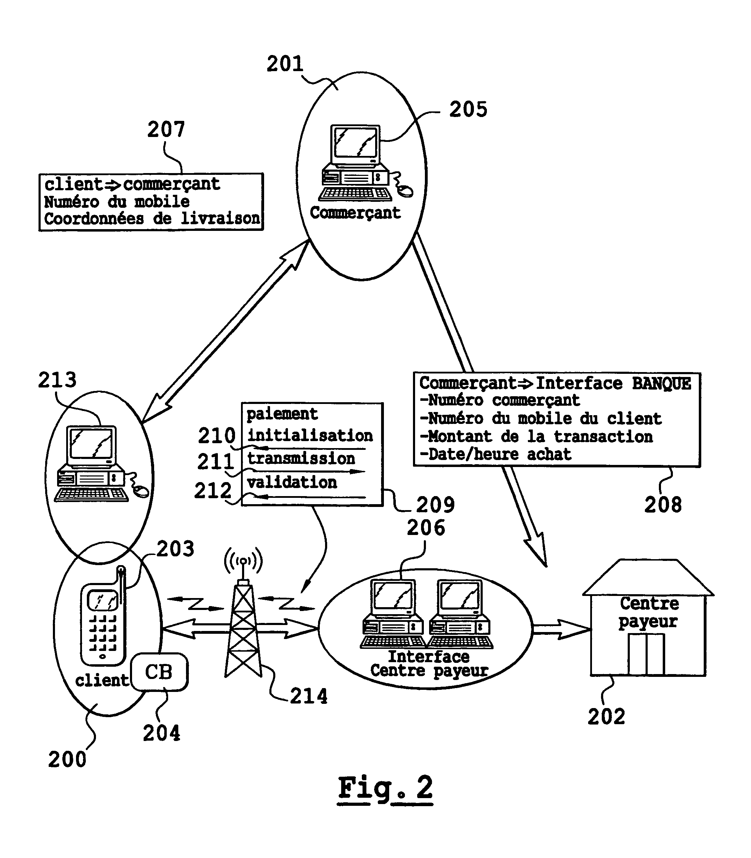

Dans le domaine des procédés de paiement à distance faisant intervenir des téléphones mobiles, il existe aujourd'hui notamment le procédé suivant, illustré à la figure 2. Sur cette figure, les trois acteurs principaux d'une transaction commerciale sont représentés. On trouve ainsi un client 200 équipé d'un ordinateur 213, un commerçant 201 et un centre payeur 202. Le client est équipé d'un téléphone mobile 203 intégrant un dispositif de lecture de cartes à puce, et plus particulièrement de cartes bancaires 204. Le commerçant 201 est ici symbolisé par un micro-ordinateur 205, le type de transaction commerciale faisant l'objet de ce procédé de paiement sécurisé concernant essentiellement des achats via le réseau Internet.

Le principe d'un tel paiement sécurisé est le suivant : Lorsque le client 200 souhaite acheter au commerçant 205 un produit, il communique au commerçant un message 207 comportant notamment son numéro de téléphone mobile, ainsi qu'éventuellement des informations d'ordre pratique, telles que les coordonnées de livraison. Cette opération constitue l'acte d'achat. Le commerçant 205 transfère alors à une interface 206 , correspondant au serveur 6 de la figure 1, du centre payeur 202 un ensemble d'informations 208 : ces informations son notamment un numéro identifiant le commerçant, le numéro du téléphone mobile du client, le montant de la transaction et la date et l'heure d'achat. Cette communication peut s'effectuer au moyen d'un lien quelconque de télécommunication : les informations 208 transférées ne sont en effet pas confidentielles, car elles ne contiennent pas en elles-mêmes d'informations relatives au paiement. Une opération de paiement 209 est ensuite effectivement et directement réalisée entre le centre payeur 202 et le client 200.

Il s'agit d'un paiement sécurisé utilisant un réseau de radiotéléphonie cellulaire 214, par exemple le réseau GSM, et plus particulièrement des messages spécifiques de type SMS (Short Message Service) qui assurent la sécurisation du paiement. Le centre payeur envoie au client un SMS 210 dit d'initialisation dans lequel elle propose les conditions de paiement. Si le client accepte la transaction proposée par le centre payeur, une opération classique de paiement est effectuée entre ces deux interlocuteurs : le code de la carte à puce 204 est tapé sur le téléphone mobile 203 et envoyé au centre payeur 202 dans un SMS 211 de transmission, qui elle-même renvoie un troisième SMS 212 d'acceptation. Eventuellement, le centre payeur peut alors confirmer au commerçant que l'opération de paiement a bien été réalisée, le commerçant étant alors en devoir de livrer au client le produit ou le service acheté.

Ce type de schéma ne fait cependant pas intervenir de terminaux de paiements électroniques tels que ceux rencontrés aujourd'hui chez des commerçants. Les terminaux de paiement électronique ne sont aujourd'hui pas adaptés pour recevoir ou pour transmettre des numéros de téléphones mobiles en vue d'une utilisation dans le cadre d'une opération de paiement.

Ce qui existe comme procédé de paiement à distance faisant intervenir des terminaux de paiement électronique n'est pas satisfaisant : lorsqu'un client passe, par téléphone ou par télécopie, ou encore par tout autre moyen ne laissant pas de preuve réelle de la commande passée, une commande d'un produit ou d'un service à un commerçant, il communique au vendeur le numéro de sa carte. Cette pratique est fréquente lorsqu'un client souhaite réserver une chambre d'hôtel ou une voiture. En cas de résiliation de la réservation, le commerçant n'est pas sur d'être effectivement payé. En effet, s'il rentre le numéro de la carte sur le terminal de paiement électronique, comme dans un cas précédemment décrit, le client sera toujours en mesure de refuser le débit correspondant sur son compte. En effet, le client étant éloigné, il ne signe pas de ticket édité par le terminal de paiement électronique.

La présente invention permet de pallier les problèmes qui viennent d'être exposés. En effet, l'invention propose notamment un terminal de paiement électronique qui permet d'exploiter la communication par un client distant au commerçant d'un numéro de téléphone, essentiellement d'un téléphone mobile, afin d'exécuter une opération commerciale. Le terminal de paiement électronique selon l'invention est équipé d'une option qui permet de choisir un tel mode de paiement. En choisissant ce mode de paiement, le commerçant communique à un centre payeur, au moyen de son terminal de paiement électronique, notamment les conditions de la transaction commerciale ainsi que le numéro de téléphone mobile du client. Le centre payeur est alors en mesure de procéder à l'opération de paiement selon le mécanisme rencontré lors de la description de la figure 2. Dans le procédé selon l'invention, différentes étapes sont prévues au cours desquelles le commerçant peut recevoir de la part du centre payeur une confirmation de paiement.

L'invention concerne donc un terminal de paiement électronique, utilisé par un commerçant pour accepter des paiements par carte, comportant notamment un clavier, une mémoire de données, un dispositif de lecture de cartes (à puce et/ou à piste), et des moyens pour émettre des données relatives à une transaction commerciale caractérisée en ce qu'il comporte des moyens pour exploiter un numéro de téléphone d'un client dans le cadre d'une transaction commerciale. Le terminal de paiement utilisé est un terminal du type de ceux habituellement utilisés par les commerçants, essentiellement pour recevoir des paiements par carte bancaire, ce terminal de paiement présentant certains perfectionnements selon l'invention. Ces terminaux ne sont pas des téléphones mobiles ou des ordinateurs personnels permettant d'effectuer des transactions commerciales sur le réseau Internet par exemple.

Dans un mode de réalisation du terminal, les moyens pour exploiter un numéro de téléphone dans le cadre d'une transaction commerciale comprennent des moyens d'identification d'un numéro de téléphone, et des moyens pour spécifier qu'un numéro de téléphone est transmis pour réaliser une transaction commerciale, ces derniers moyens faisant de préférence intervenir un code spécifique qui est transmis simultanément aux données relatives à la transaction commerciale.

Selon différents modes de réalisation du terminal celui-ci peut comporter :
- des moyens pour recevoir, lors de l'établissement d'une communication entre le terminal de paiement électronique et un serveur spécialisé distant en vue d'une émission de données relatives à une transaction commerciale, un message de confirmation d'une ou plusieurs transactions précédentes.
- des moyens pour établir de façon spécifique une communication entre le terminal et un serveur spécialisé distant dans le but d'obtenir un message de confirmation d'une ou plusieurs transactions précédentes.
- des moyens pour établir automatiquement, au bout d'une durée préalablement déterminée, une communication entre le terminal et un serveur spécialisé distant dans le but d'obtenir un message de confirmation d'une ou plusieurs transactions précédentes.

Un autre objet de l'invention est un procédé de paiement électronique caractérisé en ce qu'il comporte les différentes étapes consistant à :
- définir des caractéristiques d'une transaction commerciale entre un vendeur, équipé d'un terminal de paiement électronique, et un utilisateur d'un téléphone mobile ;
- définir un mode de paiement par téléphone au sein du terminal de paiement électronique ;
- exploiter, au sein du terminal de paiement électronique, le numéro de téléphone mobile de l'utilisateur pour réaliser de façon sécurisée la transaction commerciale.

L'étape de choix d'un mode de paiement par téléphone peut comprendre les différentes phases consistant à :
- communiquer au terminal de paiement électronique le numéro de téléphone de l'utilisateur ;
- identifier comme tel un numéro de téléphone ;
- spécifier à un serveur spécialisé distant qu'un numéro de téléphone est transmis pour réaliser une transaction commerciale.

L'invention et ses différentes applications seront mieux comprises à la lecture de la description qui suit et à l'examen des figures qui l'accompagnent. Celles-ci ne sont présentées qu'à titre indicatif et nullement limitatif de l'invention. Les figures montrent :
- à la figure 1, déjà décrite, montre un terminal de paiement électronique utilisé dans l'état de la technique ;
- à la figure 2, déjà décrite, un exemple de procédé de paiement à distance faisant intervenir une opération de paiement avec un téléphone mobile ;
- à la figure 3, un exemple de terminal de paiement électronique selon l'invention ;
- à la figure 4, un organigramme illustrant une mise en oeuvre possible du procédé selon l'invention.

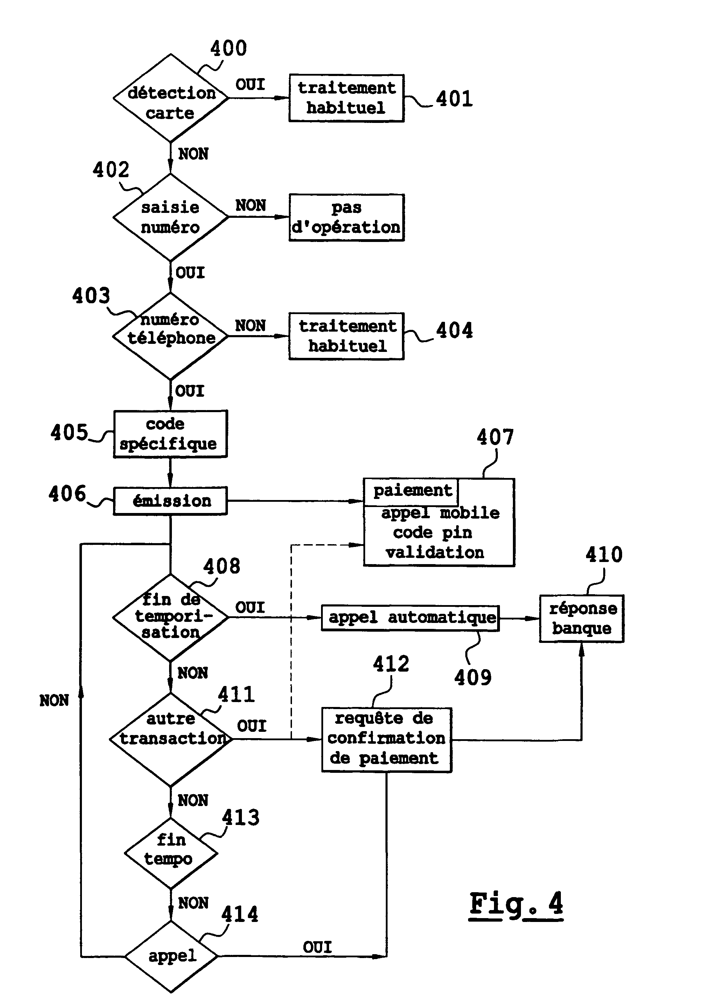

La figure 3 montre un terminal de paiement selon l'invention. Un grand nombre d'éléments présents dans le terminal de paiement selon l'invention étaient déjà présents dans les terminaux de paiement électronique de l'état de la technique décrits à la figure 1. Cette particularité illustre le fait qu'un nombre limité de modifications doit être apporté aux terminaux de paiement électronique dont dispose actuellement les commerçants pour pouvoir mettre en place le procédé selon l'invention. Les commerçants n'ont donc pas d'investissement considérable à effectuer pour pouvoir mettre en oeuvre le procédé selon l'invention qui sera décrit à la figure 4.

Les différents éléments communs entre le terminal de paiement électronique de l'état de la technique et le terminal de paiement électronique selon l'invention seront désignés par les mêmes références. On trouve ainsi dans le terminal de paiement électronique selon l'invention 300 une ouverture pour recevoir une carte à puce 2, un clavier 3, une mémoire de données 4, une mémoire de programmes 8, un module d'identification du commerçant 10, un microprocesseur 11, un bus de communication bidirectionnel 12 et un connecteur externe 13. Le module d'identification du commerçant pourrait être remplacé par des données d'identification contenues dans la mémoire 4. Un lecteur de cartes à piste, non représenté, est également présent sur les terminaux de paiement électronique.

Le terminal selon l'invention met en oeuvre des moyens spécifiques pour accepter et pour pouvoir donner suite à une transaction commerciale dans laquelle le client effectue un paiement distant au moyen de son téléphone mobile équipé d'un lecteur de cartes à puce. Ces différents moyens du terminal mobile 300 sont décrits dans l'ensemble de la figure 3 essentiellement comme des applications de la mémoire de programmes 8. Dans d'autres modes de réalisation du terminal de paiement électronique selon l'invention, ces différentes applications pourront être remplacées par des circuits électroniques spécifiques assurant la même fonction.

Ainsi, dans la mémoire de programmes 8, on trouve:
- une application 301, dite de proposition d'un menu, qui permet d'afficher sur l'écran 14 du terminal de paiement électronique 300 les différents types de paiement envisageables à partir du terminal 300. Selon l'invention, on trouve notamment une possibilité de paiement par téléphone ;
- une application 302, dite de sélection, qui permet de choisir dans le menu notamment la possibilité de paiement par téléphone. Les applications 301 et 302 peuvent être remplacées par une application 303, dite d'identification, qui est capable de reconnaître automatiquement un numéro de téléphone saisi à partir du clavier 3;
- une application 304, dite de transfert de données, qui permet d'envoyer vers le serveur 6 du centre payeur un message 15, dit message de demande de paiement, dans lequel le terminal 300 transfère essentiellement le numéro de téléphone du client, l'identification du commerçant et le montant de la transaction envisagée ;
- une application 305, dite de temporisation ;
- une application 306, dite d'appel du centre payeur, pour demander une confirmation de paiement relatif à un message de demande de paiement préalablement émis ;
- une application 307, dite d'appel automatique ;
- une application 308, dite de création d'un code spécifique.

La mise en oeuvre des applications spécifiques à l'invention, qui viennent d'être mentionnées, est plus précisément décrite dans l'organigramme de la figure 4 présentant un exemple d'enchaînement possible d'événements dans le procédé selon l'invention. L'organigramme débute par une étape de décision 400, qui consiste à savoir si le terminal de paiement électronique 300 a détecté l'insertion d'une carte à puce. Dans l'affirmative, un traitement habituel, tel que décrit à la figure 1, est réalisé au cours d'une étape 401. Si aucune carte n'est détectée, une étape de décision 402 intervient : elle consiste en la détection par le terminal de paiement 300 d'un numéro saisi sur le clavier 3. Dans d'autres exemples de mise en oeuvre, cette étape de détection d'un numéro peut éventuellement faire intervenir des moyens de reconnaissance vocale ou des moyens de réception directe d'un numéro transmis selon différents réseaux de télécommunication.

Si aucun numéro n'est détecté, aucune opération n'est effectuée. Dans le cas de détection d'un numéro, on prévoit une étape de décision 403, dans laquelle on identifie si le numéro saisi est un numéro de téléphone. Cette identification peut être faite manuellement par le commerçant, qui, lors de l'affichage d'un menu grâce à l'application 301, indique au moyen de l'application de sélection 302 s'il s'agit d'un numéro de téléphone. Dans un autre exemple, l'application 303 d'identification permet de reconnaître automatiquement si il s'agit d'un numéro de téléphone. Cette application d'identification est facile à mettre en place, les numéros de téléphones appartenant au domaine de la téléphonie mobile commençant le plus souvent par des chiffres spécifiques. Dans le cas où un numéro de téléphone n'est pas reconnu dans l'étape de décision 403, une étape 404 est entamée dans laquelle un traitement habituel est effectué, correspondant au cas où un numéro de carte est tapé sur le terminal de paiement électronique. Dans cette étape de traitement habituel 404, un ticket est édité conformément à ce qui a été décrit précédemment, et signé par le client qui doit donc être présent dans ce cas.

Dans le cas où un numéro de téléphone à été détecté dans l'étape de décision 403, une étape 405 intervient, dans laquelle le terminal de paiement élabore un message de demande de paiement, ce message 15 étant accompagné d'un entête comportant un code spécifique produit par l'application 308, de création d'un code spécifique, ce code permettant au centre payeur de reconnaître qu'il s'agit d'un paiement distant réalisé au moyen d'un téléphone. L'étape suivante est une étape d'émission 406 du message de demande de paiement 15. Cette étape fait appel à l'application de transfert de données 304. Une étape de paiement 407 est alors effectuée entre le serveur 6 du centre payeur et le client. Conformément à ce qui a été décrit à la figure 2, le serveur utilise le numéro de téléphone mobile du client pour appeler ce dernier et lui proposer de façon sécurisée de réaliser le paiement.

Suite à l'étape d'émission 406, une étape de décision 408 intervient. Il s'agit d'une étape de temporisation. Cette étape, qui fait appel à l'application 308 de temporisation, mesure un temps écoulé depuis la dernière émission d'un message de demande de paiement. Si une durée limite d'attente de réponse du centre payeur, préalablement déterminée et mémorisée dans la mémoire de données 4 du terminal 300, est atteinte depuis la dernière étape d'émission, une étape 409 d'interrogation automatique du centre payeur est mise en oeuvre. Cette étape fait appel à l'application d'appel automatique 307, qui permet au terminal de paiement d'envoyer spontanément un message spécifique au serveur 6 du centre payeur pour lui demander la confirmation d'un ou de plusieurs paiements qui auraient du être effectués suite à l'émission préalable d'un ou plusieurs messages de demande de paiement 15. A l'étape 409 succède une étape 410 dans laquelle le serveur 6 du centre payeur envoie une réponse au terminal 300.

Dans le cas où la durée limite d'attente n'a pas été atteinte, une étape de décision 411 fait suite à l'étape de décision 408. Dans cette étape de décision 411, on se demande si le commerçant souhaite traiter une autre transaction. Si c'est le cas, une communication est établie entre le terminal 300 et le serveur 6 du centre payeur, conformément à ce qui a été effectué dans les étapes 405 et 406. Dans cette situation, le message de demande de paiement, qui déclenche une étape de paiement similaire à celle de l'étape 407, est accompagné, dans une étape 412, d'une requête de confirmation de paiement, cette requête étant relative au précédant message de demande de paiement. L'étape 410 dans laquelle le serveur 6 du centre payeur transmet une réponse au terminal 300 intervient alors.

Si aucune nouvelle transaction n'a été effectuée par le commerçant, une nouvelle étape de décision 413 fait suite à l'étape de décision 411. Il s'agit encore d'une étape de temporisation, dont le déroulement est semblable à celui de l'étape 408. Dans le cas où la durée limite d'attente de réponse du centre payeur n'a pas encore été atteinte, une étape 414 intervient. Dans cette étape, le commerçant a la possibilité d'appeler directement le serveur du centre payeur, cet appel consistant en l'établissement d'une communication entre le terminal et le serveur au moyen de l'application 306. Cette communication spéciale est établie non pas pour effectuer une transaction, mais uniquement pour obtenir une confirmation de paiement, en établissant une requête similaire à celle de l'étape 412. A l'issue de l'étape 414, si aucun appel ou aucune nouvelle transaction n'ont été effectués par le commerçant, le procédé selon l'invention reprend son déroulement à partir de l'étape 408.

De façon préférée, les paiements distants au moyen de téléphone sont effectués au moyen d'un téléphone mobile équipé de lecteur de carte à puce. Ainsi, dans le procédé décrit, lorsqu'on parle de numéro de téléphone, il s'agit de préférence du numéro de téléphone mobile d'un client, ce téléphone mobile pouvant communiquer sur des réseaux de radiotéléphonie cellulaire par exemple de type GSM, et pouvant ainsi échanger via ces réseaux des données avec les serveurs du centre payeur.

## Revendications

1. Terminal de paiement électronique (300), utilisé par un commerçant pour accepter des paiements par carte, ledit terminal de paiement comportant notamment:
- une mémoire de données (4) ;
- un dispositif de lecture de cartes ;
- des moyens (13) pour émettre des données relatives à une transaction commerciale ;
- des moyens pour exploiter un numéro de téléphone d'un client dans le cadre d'une transaction commerciale, lesdits moyens pour exploiter un numéro de téléphone comportant un clavier (3) pour saisir le numéro de téléphone du client ;
**caractérisé en ce qu'**il comporte
- des moyens d'identification (302 ; 303) d'un numéro de téléphone, lesdits moyens d'identification d'un numéro de téléphone faisant intervenir soit une application d'identification (303) pour reconnaître automatiquement un numéro de téléphone, soit une application de sélection (302) pour choisir dans un menu une possibilité de paiement par téléphone et indiquer ainsi que le numéro saisi est un numéro de téléphone.

2. Terminal de paiement électronique (300) selon la revendication précédente **caractérisé en ce qu'**il comporte des moyens pour spécifier qu'un numéro de téléphone est transmis pour réaliser une transaction commerciale.

3. Terminal de paiement électronique (300) selon la revendication précédente **caractérisé en ce que** les moyens pour spécifier qu'un numéro de téléphone est transmis pour réaliser une transaction commerciale font intervenir un code spécifique (308) qui est transmis simultanément aux données relatives à la transaction commerciale.

4. Terminal de paiement électronique (300) selon l'une des revendications précédentes **caractérisé en ce qu'**il comporte des moyens (306 ;307) pour recevoir, lors de l'établissement d'une communication entre le terminal de paiement électronique (300) et un serveur (6) spécialisé distant en vue d'une émission de données relatives à une transaction commerciale, un message de confirmation d'une ou plusieurs transactions précédentes.

5. Terminal de paiement électronique (300) selon l'une des revendications 1 à 3 **caractérisé en ce qu'**il comporte des moyens (306) pour établir de façon spécifique une communication entre le terminal (300) et un serveur (6) spécialisé distant dans le but d'obtenir un message de confirmation d'une ou plusieurs transactions précédentes.

6. Terminal de paiement électronique (300) selon l'une des revendications 1 à 3 **caractérisé en ce qu'**il comporte des moyens (305 ;307) pour établir automatiquement, au bout d'une durée préalablement déterminée, une communication entre le terminal (300) et un serveur (6) spécialisé distant dans le but d'obtenir un message de confirmation d'une ou plusieurs transactions précédentes.

7. Procédé de paiement électronique **caractérisé en ce qu'**il comporte les différentes étapes consistant à :
- définir des caractéristiques d'une transaction commerciale entre un vendeur, équipé d'un terminal de paiement électronique (300) selon l'une des revendications précédentes, et un utilisateur d'un téléphone mobile ;
- définir (403) un mode de paiement par téléphone au sein du terminal de paiement électronique ;
- exploiter (406), au sein du terminal de paiement électronique, le numéro de téléphone mobile de l'utilisateur pour réaliser de façon sécurisée la transaction commerciale en saisissant sur un clavier (3) du terminal de paiement électronique (300) le numéro de téléphone mobile de l'utilisateur et en identifiant le numéro de téléphone au moyen soit d'une application d'identification (303) pour reconnaître automatiquement un numéro de téléphone, soit d'une application de sélection (302) pour choisir dans un menu une possibilité de paiement par téléphone.
- spécifier (405) à un serveur (6) spécialisé distant qu'un numéro de téléphone est transmis pour réaliser une transaction commerciale.

8. Procédé de paiement selon la revendication précédente **caractérisé en ce que** la phase de spécification est réalisée au moyen d'un code spécifique qui est transmis simultanément aux données relatives à la transaction commerciale.

9. Procédé de paiement selon l'une des revendications 7 ou 8 **caractérisé en ce qu'**il comporte l'étape supplémentaire consistant à recevoir, lors de l'établissement d'une communication entre le terminal (300) et le serveur (6) spécialisé distant en vue d'une émission de données relatives à une transaction commerciale, un message de confirmation d'une ou plusieurs transactions précédentes.

10. Procédé de paiement selon l'une des revendications 7 ou 8 **caractérisé en ce qu'**il comporte l'étape supplémentaire consistant à établir (414) une communication entre le terminal (300) et un serveur (6) spécialisé distant dans le but d'obtenir un message de confirmation d'une ou plusieurs transactions précédentes.

11. Procédé de paiement selon l'une des revendications 7 ou 8 **caractérisé en ce qu'**il comporte l'étape supplémentaire consistant à mettre en oeuvre automatiquement (408 ;413), au bout d'une durée préalablement déterminée, des moyens pour établir une communication entre le terminal (300) et un serveur (6) spécialisé distant dans le but d'obtenir un message de confirmation d'une ou plusieurs transactions précédentes.

## Patentansprüche

1. Elektronisches Zahlungsterminal (300), das von einem Händler verwendet wird, um Bezahlungen per Karte zu akzeptieren, wobei das Zahlungsterminal insbesondere Folgendes umfasst:
- einen Datenspeicher (4),
- eine Kartenlesevorrichtung,
- Mittel (13), um Daten in Zusammenhang mit einer kaufmännischen Transaktion zu senden,
- Mittel, um eine Telefonnummer eines Kunden in dem Rahmen einer kaufmännischen Transaktion zu nutzen, wobei die Mittel zum Nutzen einer Telefonnummer eine Tastatur (3) zum Eingeben der Telefonnummer des Kunden umfassen,
**dadurch gekennzeichnet, dass** es Folgendes umfasst:
- Mittel zum Identifizieren (302; 303) einer Telefonnummer, wobei die Mittel zur Identifikation einer Telefonnummer entweder eine Identifikationsanwendung (303) zum automatischen Erkennen einer Telefonnummer oder eine Auswahlanwendung (302) zur Auswahl aus einem Menü einer Zahlungsmöglichkeit per Telefon venrvenden und daher angeben, dass die eingegebene Nummer eine Telefonnummer ist.

2. Elektronisches Zahlungsterminal (300) nach dem vorhergehenden Anspruch, **dadurch gekennzeichnet, dass** es Mittel umfasst, um anzuzeigen, dass eine Telefonnummer zum Durchführen einer kaufmännischen Transaktion gesendet wird.

3. Elektronisches Zahlungsterminal (300) nach dem vorhergehenden Anspruch, **dadurch gekennzeichnet, dass** die Mittel zum Anzeigen, dass eine Telefonnummer zum Durchführen einer kaufmännischen Transaktion gesendet wird, einen spezifischen Code (308) eingreifen lassen, der gleichzeitig mit den Daten in Zusammenhang mit der kaufmännischen Transaktion gesendet wird.

4. Elektronisches Zahlungsterminal (300) nach einem der vorhergehenden Ansprüche, **dadurch gekennzeichnet, dass** es Mittel (306; 307) umfasst, um beim Aufbauen einer Kommunikation zwischen dem elektronischen Zahlungsterminal (300) und einem spezialisierten dezentralen Server (6) zum Senden von Daten in Zusammenhang mit einer kaufmännischen Transaktion eine Bestätigungsmitteilung einer oder mehrerer vorhergehender Transaktionen zu empfangen.

5. Elektronisches Zahlungsterminal (300) nach einem der Ansprüche 1 bis 3, **dadurch gekennzeichnet, dass** es Mittel (306) umfasst, um spezifisch eine Kommunikation zwischen dem Terminal (300) und einem dezentralen spezialisierten Server (6) mit dem Ziel aufzubauen, eine Bestätigungsmitteilung einer oder mehrerer vorhergehender Transaktionen zu erhalten.

6. Elektronisches Zahlungsterminal (300) nach einem der Ansprüche 1 bis 3, **dadurch gekennzeichnet, dass** es Mittel (305; 307) zum automatischen Aufbauen nach einer zuvor festgelegten Zeitspanne einer Kommunikation zwischen dem Terminal (300) und einem dezentralen spezialisierten Server (6) mit dem Ziel umfasst, eine Bestätigungsmitteilung einer oder mehrerer vorhergehender Transaktionen zu erhalten.

7. Elektronisches Zahlungsverfahren, **dadurch gekennzeichnet, dass** es die verschiedenen Schritte umfasst, die darin bestehen:
- Kenndaten einer kaufmännischen Transaktion zwischen einem Verkäufer, der mit einem elektronischen Zahlungsterminal (300) gemäß einem der vorhergehenden Ansprüche ausgestattet ist, und einem Benutzer eines Mobiltelefons zu definieren,
- eine Zahlungsart per Telefon innerhalb des elektronischen Zahlungsterminals zu definieren (403),
- innerhalb des elektronischen Zahlungsterminals die Mobiltelefonnummer des Benutzers zu nutzen (406), um abgesichert die kaufmännische Transaktion durchzuführen, indem auf einer Tastatur (3) des elektronischen Zahlungsterminals (300) die Mobiltelefonnummer des Benutzers eingegeben wird, und indem die Telefonnummer entweder mittels einer Identifikationsanwendung (303) zum automatischen Erkennen einer Telefonnummer oder mit einer Auswahlanwendung (302) zum Auswählen aus einem Menü einer Zahlungsmöglichkeit per Telefon identifiziert wird,
- einem dezentralen spezialisierten Server (6) anzuzeigen (405), dass eine Telefonnummer gesendet wird, um eine kaufmännische Transaktion durchzuführen.

8. Zahlungsverfahren nach dem vorhergehenden Anspruch, **dadurch gekennzeichnet, dass** die Spezifikationsphase mittels eines spezifischen Codes durchgeführt wird, der gleichzeitig mit den Daten in Zusammenhang mit der kaufmännischen Transaktion gesendet wird.

9. Zahlungsverfahren nach einem der Ansprüche 7 oder 8, **dadurch gekennzeichnet, dass** es den zusätzlichen Schritt umfasst, der darin besteht, bei dem Aufbauen einer Kommunikation zwischen dem Terminal (300) und dem dezentralen spezialisierten Server (6) zum Senden von Daten in Zusammenhang mit einer kaufmännischen Transaktion eine Bestätigungsmitteilung einer oder mehrerer vorhergehender Transaktionen zu empfangen.

10. Zahlungsverfahren nach einem der Ansprüche 7 oder 8, **dadurch gekennzeichnet, dass** es einen zusätzlichem Schritt umfasst, der darin besteht, eine Kommunikation zwischen dem Terminal (300) und einem dezentralen spezialisierten Server (6) mit dem Ziel aufzubauen (414), eine Bestätigungsmitteilung einer oder mehrerer vorhergehender Transaktionen zu erhalten.

11. Zahlungsverfahren nach einem der Ansprüche 7 oder 8, **dadurch gekennzeichnet, dass** es den zusätzlichen Schritt umfasst, der darin besteht, nach einer zuvor festgelegten Dauer Mittel automatisch umzusetzen (408, 413), um eine Kommunikation zwischen dem Terminal (300) und einem dezentralen spezialisierten Server (6) mit dem Ziel aufzubauen, eine Bestätigungsmitteilung einer oder mehrerer vorhergehender Transaktionen zu erzielen.

## Claims

1. An electronic payment terminal (300), utilized by a merchant to accept payments by card, said payment terminal comprising in particular:
- a data memory (4);
- a device for reading cards;
- means (13) for sending data related to a commercial transaction;
- means for getting the telephone number of a customer in the framework of a commercial transaction, said means to get the telephone number comprising a keypad (3) for entering the telephone number of the client;
**characterized in that** the terminal comprises
- means (302; 303) for identifying a telephone number, said identification means for a telephone number bringing either an identification application (303) for automatically recognizing a telephone number, or a selection application (302) for choosing a payment by telephone option from a menu and for indicating as well that the number entered is a telephone number into play.

2. The electronic payment terminal (300) according to the previous claim, **characterized in that** the terminal comprises means for specifying that a telephone number is transmitted to perform a commercial transaction.

3. The electronic payment terminal (300) according to the previous claim **characterized in that** the means for specifying that a telephone number is transmitted to perform a commercial transaction bring a specific code (308) that is transmitted simultaneously with data related to the commercial transaction into play.

4. The electronic payment terminal (300) according to one of the previous claims **characterized in that** the terminal comprises means (306; 307) to receive, during establishment of communication between the electronic payment terminal (300) and a specialized remote server (6) in view of a sending data related to a commercial transaction, a message confirming one or more previous transactions.

5. The electronic payment terminal (300) according to one of claims 1 to 3 **characterized in that** the terminal comprises means (306) for specifically establishing communication between the terminal (300) and a specialized remote server (6) in the object of obtaining a message confirming one or more previous transactions.

6. The electronic payment terminal (300) according to one of claims 1 to 3 **characterized in that** the terminal comprises means (305; 307) to automatically establish, at the end of a previously determined duration, communication between the terminal (300) and a specialized remote server (6) in the object of obtaining a message conforming one or more previous transactions.

7. An electronic payment method **characterized in that** the method comprises different steps consisting of:
- defining the characteristics of a commercial transaction between a merchant, equipped with an electronic payment terminal (300) according to one of the previous claims, and a user of a mobile telephone;
- defining (403) a payment method by telephone within the electronic payment terminal;
- getting (406), within the electronic payment terminal, the mobile telephone number of the user to securely perform the commercial transaction by typing into a keypad (3) of the electronic payment terminal (300) the mobile telephone number of the user and by identifying the telephone number by means of either an identification application (303) for automatically recognizing a telephone number, or a selection application (302) for choosing a payment by telephone option from a menu.
- specifying (405) to a specialized remote server (6) that a telephone number is transmitted to perform a commercial transaction.

8. The payment method according to the previous claim **characterized in that** the specification phase is carried out by means of a specific code that is transmitted simultaneously with data related to the commercial transaction.

9. The payment method according to one of claims 7 or 8 **characterized in that** the method comprises the additional step consisting of receiving, during establishment of communication between the terminal (300) and the specialized remote server (6) in view of a sending data related to a commercial transaction, a message confirming one or more previous transactions.

10. The payment method according to one of claims 7 or 8 **characterized in that** the method comprises the additional step consisting of establishing (414) communication between the terminal (300) and a specialized remote server (6) in the object of obtaining a message confirming one or more previous transactions.

11. The payment method according to one of claims 7 or 8 **characterized in that** the method comprises the additional step consisting of automatically implementing (408; 413), at the end of a previously determined duration, means for establishing communication between the terminal (300) and a specialized remote server (6) in the object of obtaining a message confirming one or more previous transactions.
